# EUROPEAN PATENT APPLICATION

(11) **EP 4 668 158 A1**
(43) Date of publication of application: **24.12.2025**
(21) Application number: 24305983.9
(22) Date of filing: 21.06.2024
(51) Int. Cl.: G06K 19/07

(54) **METHOD FOR MANAGING MULTIPLE SERVICES IN A CONTACTLESS SMART CARD**

(71) Applicant: THALES DIS FRANCE SAS, 92190 Meudon (FR)
(72) Inventor: PALADJIAN, Pierre, 13190 Allauch (FR); MARTINEZ, Frédéric, 13011 Marseille (FR)
(74) Representative: Grevin, Emmanuel

(57) **Abstract**

The invention is a method for managing a contactless smart card (10) able to provide two or more services. Each of the services can be either in an activated state or in a deactivated state. The smart card comprises a list (13) specifying an order of activation of the services. The said smart card comprises a contactless sensor able to detect an appearance of an electromagnetic field generated by a contactless apparatus. A contactless manager embedded in the smart card both deactivates the service previously activated and activates the next service from the list each time the contactless sensor detects the appearance of the electromagnetic field during a preset duration.

## Description

### (Field of the invention)

The present invention relates to methods of managing multiple services in a contactless smart card. It relates particularly to methods for activating a service in a contactless smart card able to provide a plurality of services.

### (Background of the invention)

People get used to get more and more physical cards in their wallet like debit payment cards, credit payment cards (which can be issued by different banks), loyalty cards, membership program cards, access cards, or identity cards. It can be cumbersome and time-consuming to find the desired card when a person wants to make a transaction with that card.

The possibility to store services and applications initially distributed across multiple cards in one physical card is an interesting solution and a relief for users. However, when holding a multi-application card, the user faces the problem to select the desired service or application at the right moment.

In some known solutions, the selection relies on an interaction between the card and the applicative terminal that proposes to select the relevant service through a user interface embedded in the terminal. In such cases, the applicative terminal (like a point-of-sale terminal for instance) must include an application designed to allow the user to select the relevant service in the smart card.

In some known solutions, the selection relies on physical components like buttons and battery embedded in the card. Such cards are costly due to the battery and not eco-friendly because of the battery which may have a limited lifespan and, in addition, must be recycled/reprocessed in accordance with regulatory or legal provisions.

### (Summary of the Invention)

There is a need to provide a smart card allowing a user to select the desired service without depending on a custom selection application hosted by an applicative terminal, and without requiring the smart card to embed a battery.

The invention aims at solving the above-mentioned technical problem.

An object of the present invention is a contactless smart card able to provide two or more services. Each of these services can be either in an activated state or in a deactivated state. The smart card comprises a list that specifies the order of activation of these services. The smart card comprises a contactless sensor able to detect the appearance of an electromagnetic field generated by another contactless apparatus. The smart card comprises a contactless manager configured to both deactivate the service which is currently in the activated state and activate the next service from the list each time the contactless sensor detects the appearance of the electromagnetic field during a preset duration.

Advantageously, the contactless manager may be either in an enabled state or in a disabled state, and the smart card may comprise a user sensor configured to set the contactless manager either in the enabled state or in the disabled state when triggered by a user of the smart card.

Advantageously, when the contactless manager is set in the disabled state, the smart card may be configured to automatically start providing the service which is in activated state.

Advantageously, the smart card may comprise a non-volatile memory and store in the non-volatile memory an indication of which service is in activated state, and the smart card may be configured to read the indication when starting up for determining which service is in the activated state.

Advantageously, when the smart card starts up, the smart card may be configured to consider that the first service of the list is in the activated state.

Advantageously, the smart card may comprise a user interface and the contactless manager may be configured to inform the user of the card which of said services is in the activated state through the user interface.

Advantageously, the contactless manager may be configured to generate a message reflecting which of the services is in the activated state and to send this message to the contactless apparatus.

Another object of the present invention is a system including a contactless smart card according to the invention and a contactless apparatus. The contactless apparatus comprises a monitoring application configured to analyze the message received from the smart card and to inform the user of the card which of said services is in the activated state through the user interface of the contactless apparatus.

Advantageously, the message may contain an NFC Data Exchange Format (NDEF) tag.

Another object of the present invention is a method for managing a contactless smart card able to provide two or more services. Each of these services can be either in an activated state or in a deactivated state. The smart card comprises a list specifying an order of activation of said services. The smart card comprises a contactless sensor able to detect an appearance of an electromagnetic field generated by a contactless apparatus. A contactless manager embedded in the smart card both deactivates the service previously activated in the smart card and activates in the smart card the next service from the list each time the contactless sensor detects the appearance of the electromagnetic field during a preset duration.

Advantageously, the contactless manager can be either in an enabled state or in a disabled state. The smart card may comprise a user sensor configured to set the contactless manager either in an enabled state or in a disabled state when triggered by a user of the smart card. When the contactless manager is set in the disabled state, the smart card may automatically start providing the service which is in activated state.

Advantageously, the smart card may comprise a non-volatile memory and store in the non-volatile memory an indication of which service is in activated state. The smart card may read the indication when starting up for determining which service is in the activated state.

Advantageously, when the smart card starts up, the smart card may consider that the first service of the list is in the activated state.

Advantageously, the smart card may comprise a user interface and the contactless manager may inform a user of the card which of the services is in the activated state through the user interface.

Advantageously, the contactless manager may generate a message reflecting which of the services is in the activated state and send the message to the contactless apparatus. The contactless apparatus may comprise a monitoring application which analyzes the message and informs the user of the smart card which of said services is in the activated state through a user interface of the contactless apparatus.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts an architecture of a system comprising a contactless apparatus and a contactless smart card according to a first example of the invention;
- Figure 2 depicts a flow chart for the selection of a service in a contactless smart card according to an embodiment of the invention; and
- Figure 3 depicts interactions between a contactless apparatus and a contactless smart card according to an embodiment of the invention.

### (Detailed description of the preferred embodiments)

The invention may apply to any type of contactless smart card able to communicate with a contactless reader through a short-range modulated magnetic field. In particular, the invention may apply to devices complying with the ISO/IEC14443, Mifare^{®}, Felica^{®}, ISO/IEC 15693 or NFC Forum Tag standards.

In contactless domain, communication protocols are based on the exchanging of data via a modulated electromagnetic field. A contactless reader (also known as Proximity Coupling Device) has an antenna which is able to modulate the electromagnetic field (also called Radio Frequency field or RF field) and to provide energy to a contactless smart card. Both the contactless reader and the contactless smart card communicate thanks to an inductive coupling in a field frequency which may equal to 13.56 MHz. In particular, the ISO/IEC14443, ISO/IEC21481 and ISO/IEC18092 standards provide modulation technologies and communication protocols which may be used in contactless domain.

A passive contactless device is unable to generate a modulated electromagnetic field. The passive device uses the electromagnetic field produced by another contactless device. Contactless smart cards are generally passive device.

The invention may apply to contactless smart cards having a form factor like a conventional smart card or a wearable like a bracelet, a ring or a key fob.

The invention may apply to contactless smart cards designed to provide services in many applicative domains, like Identity, Health, Access (to physical areas or logical areas), payment, transport, loyalty and so on. For instance, the invention may apply to a contactless smart card hosting a credit payment application issued by a first bank, a debit payment application issued by another bank, a digital currency wallet, a cryptocurrency wallet, a public transport network access application and a loyalty application.

A service can be provided (or offered) by an application embedded in the contactless smart card. An application may be designed to provide a single service. An application may be designed to provide multiple services and provides one service selected by the configuration that has been enabled for that application. In other words, setting a service in the activated state can be performed either by activating an application or activating a specific configuration for an application.

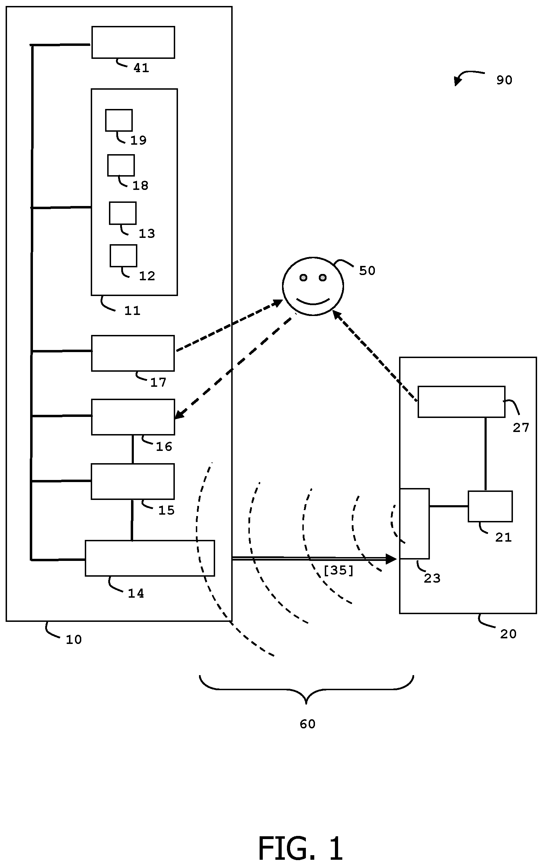

Figure 1 shows an architecture of a system 90 comprising a contactless apparatus 20 and a contactless smart card 10 according to a first example of the invention.

The contactless apparatus 20 embeds a contactless reader 23 (including an antenna) which can generate a modulated electromagnetic field 60 and to communicate with the contactless card 10 using a contactless communication protocol.

In a preferred embodiment, the contactless apparatus 20 is an NFC-capable smartphone, where NFC stand for Near Field Communication. Alternatively, the contactless apparatus may be a tablet PC, a personal digital assistant (PDA), or a smartwatch.

The contactless smart card 10 is a multi-application contactless device which includes a hardware processor (not shown) and a non-volatile memory 11. The memory 11 stores both a first application 18 designed to provide a first service and a second application 19 designed to provide a second service.

Generally, the contactless smart card 10 has limited memory, power, and computing resources.

Each of said first and second services can be either in an activated state or in a deactivated state. In practice, this can be implemented by the fact that each said first and second applications can be either in an activated state or in a deactivated state.

In one example, the first application 18 may be a credit payment application offering a credit payment service and the second application 19 may be a debit payment application offering a debit payment service.

The memory 11 stores a list 13 specifying an order of activation of the services available into the card 10.

In some embodiments, the list may be implemented as an ordered list of elements (i.e. services or applications) which are ordered from highest priority to lowest priority.

In some embodiments, the list may be implemented in a repository (like a file or a database) including a series of pairs comprising a service (and/or applications) and its assigned priority level.

The smart card 10 comprises a contactless interface including an antenna and able to both harvest energy from the electromagnetic field to power the smart card and to communicate with the contactless reader generating the electromagnetic field.

The smart card 10 comprises a contactless sensor 14 which is configured to detect the appearance of the electromagnetic field 60 generated by the contactless apparatus 20.

In some embodiment, the contactless interface may incorporate the contactless sensor 14.

In some embodiment, the smart card may be a dual interface card (also called dual card) comprising both a contactless interface and a contact interface designed to communicate through a contact communication protocol like T=0 or T=1 defined by the ISO7816 standard.

The smart card 10 comprises a contactless manager 15 which is configured to both deactivate the service which is currently in the activated state (if any) and activate the next service from the list 13 each time the contactless sensor 14 detects the appearance of the electromagnetic field during a preset duration. In other words, not only the contactless sensor 14 detects the appearance of the electromagnetic field, but it also verifies that this electromagnetic field remains present for the preset duration.

For example, the preset duration can be fixed to a value in the range [1 - 20] seconds. Thanks to this range, the smart card 10 can ensure that the contactless apparatus 20 was approached voluntarily by its user and exclude a handling error.

The contactless sensor 14 may be configured to check that the energy harvested (by the card) from the electromagnetic field 60 is higher than a predefined threshold during the preset duration and to consider that the detection fails if the harvested energy is below the threshold.

It may happen that the smart card 10 did not have a service in the activated state before the detecting the appearance of the electromagnetic field. In this case, the card 10 does not have a currently activated service and only the activation operation is performed by the contactless manager 15 when the contactless sensor 14 detects the appearance of the electromagnetic field during the preset duration.

In some embodiments, the non-volatile memory 11 may store an indication 12 of which service is in activated state. The smart card can be configured to read said indication when starting up for determining which service is in the activated state. Thus, the smart card 10 can retain the activated service across multiples transactions (or communication sessions), even if the card is powered off between sessions. For the sake of clarity, when the card enters the electromagnetic field, the startup operation of the card 10 is performed sufficiently early in relation to detection of the electromagnetic field by the contactless sensor 14 so that the card 10 can already determine which service is in activated state at the time the contactless manager 15 is triggered by the contactless sensor 14.

In some embodiments, when the smart card starts up, the smart card can be configured to consider that the first service of the list 13 (i.e. service or application having the highest assigned priority) is in the activated state. In other words, the smart card determines which service has the highest priority in the list 13 then set it in activated state.

The smart card may manage the list 13 in a cyclic way where the first element of the list data is considered as following the last element of the list.

According to some embodiments, the user 50 may select and activate the desired service in the smart card by presenting the contactless smart card in the electromagnetic field 60 of the contactless apparatus 20 a certain number of times until the relevant service becomes activated. Moving the smart card closer to the contactless apparatus is known as a "tap".

In some embodiments, the priority order of activation of the services specified in the list 13 can be frozen. For instance, the content of the list can be defined at personalization stage during the smart card issuance.

In some embodiments, the content of the list 13 can be updated on the field during the card life. In particular, the content of the list can be updated to reflect the utilization rate of each of the services. For example, the highest activation priority could be assigned to the most used service/application. The card can have a supervisor unit 41 which is configured to spy which activated service is used by the user at each session, to record a track of usage, then to update the list when a predefined event occurs. For example, the supervisor unit 41 can be configured to update the list the first time the card 10 starts each month. If the card is a dual interface card, the supervisor unit 41 can be configured to update the list when coupled through its contact interface with an applicative terminal. For instance, a payment card can embed a supervisor unit 41 which updates the list 13 each time the card is coupled to an Automated Teller Machine (ATM) which is assumed to provide the card with sufficient power.

In some embodiments, the smart card 10 can include a user interface 17 like a display, a sound generator, a vibrator, or a light emitting system. The contactless manager 15 can be configured to inform the user 50 of the smart card which of the services is in the activated state through the user interface 17. For instance, the contactless manager 15 can request an embedded e-paper screen to show an identifier of the activated service or to turn on a LED associated with the activated service. Thus, the smart card may provide feedback to the user by itself.

In some embodiments, the contactless manager 15 can be configured to generate a message 35 that reflects which of the services is in the activated state. Then, the contactless manager 15 can be configured to send the message 35 to the contactless apparatus 20. Preferably the contactless manager 15 sends the message 35 through a contactless communication channel relying on the electromagnetic field 60 generated by the contactless apparatus 20. The contactless apparatus may comprise a monitoring application 21 which is configured to analyze the received message 35 and to inform the cardholder (i.e. user 50) of the card which of the services is in the activated state into the card 10. The monitoring application 21 can trigger the display of a specific phrase through the user interface 27 of the contactless apparatus for instance.

Preferably, the message 35 contains an NFC Data Exchange Format (NDEF) tag or is a NDEF tag. Such embodiment is well-suited when the contactless apparatus 20 is an NFC-capable smartphone for example.

In some embodiments, the contactless manager 15 may be set either in an enabled state or in a disabled state (also called "on state" and "off state") and the smart card 10 may comprise a user sensor 16 which is configured to set the contactless manager 15 either in the enabled state or in the disabled state when it is triggered by the user 50 of the smart card 10.

The user sensor 16 can be a push button, a capacitive button, a light sensor, or a fingerprint sensor configured to detect the presence of a finger.

In some embodiments, when the contactless manager 15 is set in the disabled state, the smart card 10 is configured to automatically start providing the service which is in activated state. In this case, the cardholder (i.e. user 50) can voluntary disabled the contactless manager 15 so that the smart card 10 keeps active the service which is selected by default during the starting of the card. When the contactless manager 15 is disabled, the card does not try to change the currently activated service even if it detects the appearance of the electromagnetic field 60 during a preset duration.

For example, the user may trigger the user sensor 16 (for instance by pressing a push button) for setting the contactless manager 15 in the enabled state (assuming contactless manager 15 is by default in disabled state) so that the smart card selects and activates a new service based on the list 13.

In some embodiments, the contactless sensor 14 may be configured to assess (or measure) the value (average over a period) of energy level of the electromagnetic field 60 and to identify the type of contactless apparatus based on the value of energy level. For instance, the contactless sensor 14 may be configured to consider that the contactless apparatus 20 is a Point of Sale (POS) terminal if the measured value of energy level exceeds a preset value and that the contactless apparatus 20 is a phone in other cases. The smart card 10 may be configured to automatically disable the contactless manager 15 when it detects the contactless apparatus 20 is a POS terminal so that the service activated by default is used to conduct a payment transaction with the POS terminal. Likewise, the smart card 10 may be configured to automatically enable the contactless manager 15 when it detects the contactless apparatus 20 is not a POS terminal so that the service activated by default is changed.

In some embodiments, the contactless sensor 14 may be configured to assess (or measure) the evolution over time of the energy level of the electromagnetic field 60 and to identify the type of contactless apparatus based on the evolution of the energy level. For instance, the contactless sensor 14 may be configured to consider that the contactless apparatus 20 is a Point of Sale (POS) terminal if the measured energy level is stable (variation less than a chosen threshold) over a preset time and that the contactless apparatus 20 is a phone when the energy level is too fluctuating.

In some embodiments, the contactless sensor 14 may be configured to assess (or measure) both the value of the energy level and the evolution over time of the energy level and to take the combination into account to detect the type of the contactless apparatus 20.

In some embodiments, the smart card 10 may be configured to authorize only one of said services (or applications) to be in activated state at any given time. Such a smart card 10 cannot have multiple services set to the activated state simultaneously. Thus, at any time, the smart card 10 can have either no currently activated service or a single activated service.

In some embodiments, the smart card 10 may embed services or applications belonging to different types. For instance, a first type may be related to transport and the second type can be related to payment. The smart card 10 may be designed to have one service (or application) of each type simultaneously in activated state at any given time. The smart card may be configured to authorize deactivation and activation of services (or applications) of the second type only. For instance, the car may store an indicator that specify which type of service can be automatically switched when detecting the appearance of the electromagnetic filed. Such a card keeps the service of the first type (ex: transport) always activated and authorize the activated service of the second type (ex: payment) to be automatically replaced by another one having the same type. In some embodiments, the second type may comprise different kinds of service. For instance, the second type may encompass both a loyalty service, an access service, and a payment service.

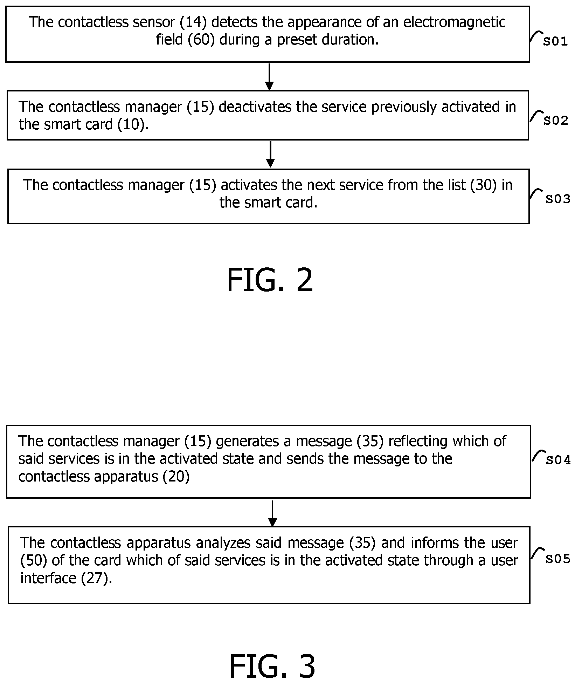

Figure 2 shows a flow chart for the selection of a service in a contactless smart card according to an embodiment of the invention.

Firstly, the user 50 approaches the contactless smart card 10 near the contactless apparatus 20. As soon as the smart card 10 is powered by the electromagnetic field 60, it performs its startup operation during which it identifies which service is in activated state by default.

The contactless sensor 14 (embedded in the smart card 10) detects (step S01) the appearance of the electromagnetic field 60 during a preset duration. Then, the contactless manager 15 (embedded in the smart card 10) deactivates (step S02) the service previously activated (if any), then activates (step S03) the next service according to the order of service activation which is specified in the list 13.

Preferably, if the number of services specified in the list 13 is higher than two, the smart card stores in its own non-volatile memory an indication 12 of which service is currently activated state. Thus, the next time the smart card enters the electromagnetic field 60 during the preset duration, the service activated by default may be different from the one activated by default during the previous contactless session.

Figure 3 shows interactions between a contactless apparatus 20 and a contactless smart card 10 according to an embodiment of the invention.

Once the contactless manager 15 (embedded in the smart card 10) sets the next service in the activated state (based on the order of service activation specified by the list 13), the contactless manager 15 can generate (step S04) a message 35 reflecting which of the services is in the activated state and send the message 35 to the contactless apparatus 20. In turn, a monitoring application 21 embedded in the contactless apparatus may analyzes (step S05) the received message 35 and informs the user 50 of the smart card 10 which of the services is in the activated state through a user interface 27 of the contactless apparatus.

The message 35 may be conveyed from the smart card 10 to the contactless apparatus 20 through a contactless communication protocol. Preferably, the message 35 may contain a NDEF tag comprising an identifier of the activated service.

The contactless apparatus 20 can be configured to provide the information to the user 50 by way of a screen or an audio message for instance.

In some embodiments, the smart card may embed a user interface 17 and directly provide the user with an identifier of the currently activated service through this user interface 17. Preferably, the user interface 17 may be a light-emitting diode (LED) or bistable display that can hold a message even when no longer powered.

In some embodiments, the contactless manager 15 (embedded in the smart card 10) can be either in an enabled state or in a disabled state. The smart card may comprise a user sensor 16 configured to set the contactless manager 15 either in the enabled state or in the disabled state when the user 50 triggers the user sensor 16. When the user 50 voluntarily deactivates the contactless manager 15 (by triggering or not the user sensor 16), the smart card may automatically start providing the service which is currently in activated state.

In some embodiments, the smart card comprises an indication 12 of which service is in activated state and the smart card reads the indication 12 when starting up for determining which service is in the activated state. Thus, the last activated service (during a previous contactless session) may remain the currently activated service through multiple contactless applicative sessions.

To illustrate one example of the method according to the invention, the smart card may comprise a first application providing a credit payment service, a second application providing a payment voucher service and a third application providing a debit payment service. Assuming that the list 13 specifies the following order starting from the highest priority: first application, second application and third application. If the user wants to perform a payment transaction using the debit payment service, the user may tap a first time the smart card to their smartphone to select and activated the second application, then tap a second time the smart card to their smartphone to select and activated the third application. Then, the user may tap a third time the smart card to the POS terminal (by triggering the user sensor 16 in the same action to disable the contactless manager 15) to accept a payment transaction using the debit payment service which is the last activated service.

In some embodiments, when the smart card starts up, the smart card may consider that the first service of the list 13 (i.e. service having the highest priority in the list) is in the activated state. Thus, every time the smart cards starts, the smart card 10 may not take into account the last service to have been activated during a previous contactless session.

The invention is not limited to management of two services or applications. It allows to manage selection and activation of a service or an application among a large number of service or applications embedded in a contactless smart card. For example, a contactless smart card may contain seven contactless applications dedicated to as many services like a physical access control (for opening a door), a logical access control (for logon in a laptop), a transport application (for accessing a mass transit network), an identity service, a digital currency purse, a credit payment application and a debit payment application.

Thanks to the invention, the user can easily select and activate the desired service or application into the smart card.

Thanks to some embodiments of the invention, the contactless smart card may allow the user to select and activate the appropriate service without requiring the contactless apparatus to be customized with a specific application designed to allow the user to select the desired service. In particular, the smart card may allow the user to select and activate the desired service/application when placed in the electromagnetic filed generated by a conventional contactless reader. Thus, smart cards according to some embodiments of the invention remain compatible with the existing parks of contactless terminals, like ATM and POS terminal.

## Claims

1. A contactless smart card (10) able to provide two or more services,
wherein each of said services can be either in an activated state or in a deactivated state,
wherein said smart card comprises a list (13) specifying an order of activation of said services,
wherein said smart card comprises a contactless sensor (14) able to detect an appearance of an electromagnetic field (60) generated by a contactless apparatus (20) and
wherein said smart card comprises a contactless manager (15) configured to both deactivate the service which is currently in the activated state and activate the next service from the list each time the contactless sensor (14) detects the appearance of the electromagnetic field during a preset duration.

2. A contactless smart card according to claim 1, wherein the contactless manager (15) can be either in an enabled state or in a disabled state, and
wherein said smart card comprises a user sensor (16) configured to set the contactless manager (15) either in said enabled state or in said disabled state when triggered by a user (50) of the smart card.

3. A contactless smart card according to claim 2, wherein, when the contactless manager (15) is set in the disabled state, the smart card is configured to automatically start providing the service which is in activated state.

4. A contactless smart card according to claim 1, wherein the smart card comprises a non-volatile memory (11) and stores in said non-volatile memory an indication (12) of which service is in activated state and
wherein the smart card is configured to read said indication when starting up for determining which service is in the activated state.

5. A contactless smart card according to claim 1, wherein when the smart card starts up, the smart card is configured to consider that the first service of the list is in the activated state.

6. A contactless smart card according to claim 1, wherein said smart card comprises a user interface (17) and wherein the contactless manager (15) is configured to inform a user of the card which of said services is in the activated state through the user interface.

7. A contactless smart card according to claim 1, wherein the contactless manager (15) is configured to generate a message (35) reflecting which of said services is in the activated state and to send said message to the contactless apparatus (20).

8. A system including a contactless smart card according to claim 7 and the contactless apparatus (20), wherein the contactless apparatus comprises a monitoring application (21) configured to analyze said message (35) and to inform a user (50) of the card which of said services is in the activated state through a user interface (27) of the contactless apparatus.

9. A system according to claim 8, wherein the message (35) contains an NFC Data Exchange Format (NDEF) tag.

10. A method for managing a contactless smart card (10) able to provide two or more services,
wherein each of said services can be either in an activated state or in a deactivated state,
wherein said smart card comprises a list (13) specifying an order of activation of said services,
wherein said smart card comprises a contactless sensor (14) able to detect an appearance of an electromagnetic field (60) generated by a contactless apparatus (20) and
wherein a contactless manager (15) embedded in said smart card both deactivates (S02) the service previously activated and activates (S03) the next service from the list each time the contactless sensor (14) detects (S01) the appearance of the electromagnetic field during a preset duration.

11. A method according to claim 10, wherein the contactless manager (15) can be either in an enabled state or in a disabled state,
wherein said smart card comprises a user sensor (16) configured to set the contactless manager (15) either in said enabled state or in said disabled state when triggered by a user (50) of the smart card, and
wherein, when the contactless manager (15) is set in the disabled state, the smart card automatically starts providing the service which is in activated state.

12. A method according to claim 10, wherein the smart card comprises a non-volatile memory (11) and stores in said non-volatile memory an indication (12) of which service is in activated state and
wherein the smart card reads said indication when starting up for determining which service is in the activated state.

13. A method according to claim 10, wherein when the smart card starts up, the smart card considers that the first service of the list is in the activated state.

14. A method according to claim 10, wherein said smart card comprises a user interface (17) and wherein the contactless manager (15) informs a user of the card which of said services is in the activated state through the user interface.

15. A method according to claim 10, wherein the contactless manager (15) generates (S04) a message (35) reflecting which of said services is in the activated state and sends said message to the contactless apparatus (20), and
wherein the contactless apparatus comprises a monitoring application (21) which analyzes (S05) said message (35) and informs a user (50) of the card which of said services is in the activated state through a user interface (27) of the contactless apparatus.
